**Europäisches Patentamt**

**European Patent Office**

**Office européen des brevets**

(19)

(11) Veröffentlichungsnummer : **0 157 990**
**B1**

(12)

# EUROPÄISCHE PATENTSCHRIFT

(45) Veröffentlichungstag der Patentschrift :
02.12.87

(21) Anmeldenummer : **84730149.6**

(22) Anmeldetag : **20.12.84**

(51) Int. Cl.⁴ : **F 16 M  7/00**, H 02 K  5/00

(54) **Elektrische Maschine.**

(30) Priorität : **27.02.84 DE 3407482**

(43) Veröffentlichungstag der Anmeldung :
**16.10.85 Patentblatt 85/42**

(45) Bekanntmachung des Hinweises auf die Patenterteilung : **02.12.87 Patentblatt 87/49**

(84) Benannte Vertragsstaaten :
**AT CH DE FR GB IT LI SE**

(56) Entgegenhaltungen :
**DE-A- 2 204 457**
**DE-A- 2 361 971**
**FR-A- 2 169 173**
**FR-A- 2 315 056**
**GB-A-  880 900**

(73) Patentinhaber : **Siemens Aktiengesellschaft Berlin
und München**
**Wittelsbacherplatz 2**
**D-8000 München 2 (DE)**

(72) Erfinder : **Spirk, Franz**
**Schuckertdamm 322**
**D-1000 Berlin 13 (DE)**

## Beschreibung

Die Erfindung bezieht sich auf eine elektrische Maschine, mit horizontaler Welle, bei der zur Abstützung auf dem Fundament zwischen dem Maschinengehäuse und dem Fundament auf jeder Maschinenseite eine senkrecht stehende, parallel zur Maschinenlängsachse verlaufende rechteckige Platte mit zwei horizontalen Auflageplatten vorgesehen ist. Eine derartige Anordnung zur Abstützung ist aus der GB-A-880 900 bekannt. Diese Abstützung vermeidet bei Wärmedehnung ein Gleiten von Befestigungsteilen.

Weiterhin ist es zur Abstützung einer elektrischen Maschine mit vertikaler Welle an einem Fundament, welches das Maschinengehäuse ringförmig umgibt, aus der DE-A-22 04 457 bekannt, Hydraulikelemente zu verwenden. Diese zwischen den Wänden des Fundamentes und dem Maschinengehäuse paarweise jeweils in einer Radialebene liegenden, gegenüber der Maschinenlängsachse symmetrisch angeordneten Hydraulikelemente bestehen jeweils aus einer mit Flüssigkeit gefüllten Kolben-Zylinder-Einrichtung. Der mittlere Kolben unterteilt das Gehäuse des Hydraulikelementes in zwei Kammern, von denen die eine an der Maschinenseite und die andere an der Fundamentseite liegt. Die Begrenzung der Kammern sind entweder mit dem Maschinengehäuse oder mit dem Fundament verbunden. Diese Kammern der in der Radialebene zu Paaren zusammengefaßten Hydraulikelemente sind über Kreuz verbunden, indem jeweils die auf einer Maschinenseite radial innen liegende mit der radial außen liegenden auf der anderen Maschinenseite über Leitungen verbunden ist. Da die Hydraulikelemente abgedichtet sind, kann ein Flüssigkeitsausgleich nur über die Leitungen erfolgen, die ein geschlossenes Kreissystem bilden. Tritt nun beim Betrieb der elektrischen Maschine infolge Erwärmung eine Wärmedehnung des Maschinengehäuses auf, so bewegen sich die Kolben der auf beiden Maschinenseiten liegenden Hydraulikelemente radial nach außen. Dabei tritt ein Flüssigkeitsausgleich über die Leitungen auf, so daß die Kolbenbewegungen nicht behindert werden. Auf diese Weise entstehen keine Wärmedehnungsbeanspruchungen in der Abstützung. Durch die besondere paarweise Anordnung ist auch jederzeit gewährleistet, daß die Zentrierung der Maschine aufrechterhalten ist.

Der Erfindung liegt die Aufgabe zugrunde, bei einer elektrischen Maschine mit horizontaler Achse, der eingangs beschriebenen Art, die Abstützung so auszubilden, daß Wärmedehnungen ohne ein Gleiten von Teilen der Befestigung zwischen dem Fundament und dem Maschinengehäuse bei Beibehaltung der Zentrierung sicher aufgenommen werden.

Zur Lösung dieser Aufgabe ist gemäß der Erfindung eine elektrische Maschine mit horizontaler Welle der eingangs beschriebenen Art so ausgebildet, daß zusätzlich in mindestens zwei, mit Abstand zueinander liegenden Radialebenen jeweils auf jeder Maschinenseite symmetrisch zur Maschinenlängsachse Hydraulikelemente angeordnet sind, die jeweils auf jeder Maschinenseite zwei Kammern bilden, von denen jeweils die auf einer Maschinenseite innen liegende mit der radial außen liegenden auf der anderen Maschinenseite über Leitungen verbunden ist, wobei die Begrenzungen der Kammern entweder mit dem Maschinengehäuse oder mit dem Fundament verbunden sind, und daß auf jeder Maschinenseite am Maschinengehäuse und am Fundament parallel zu zumindest einem Hydraulikelement liegende Anschläge vorgesehen sind, deren senkrecht gegenüberstehende Anschlagflächen zueinander einen Abstand aufweisen, der angenähert der maximalen Wärmedehnung entspricht und kleiner als der Luftspalt der Maschine ist.

Die in der Befestigung des Maschinengehäuses auf dem Fundament vorgesehenen, zur Maschinenlängsachse parallelen rechteckigen Platten, die mit den beiden horizontalen Auflageplatten ein Doppel-T-Profil bilden, haben in radialer Richtung nur eine geringe Steifigkeit und nehmen somit Wärmedehnungen durch Biegung um ihre Längsachse auf. Dabei entstehen am Fundament keine nennenswerten Wärmedehnungskräfte. Auch die jeweils zwischen dem Maschinengehäuse und dem Fundament angeordneten Hydraulikelemente, durch die auf jeder Maschinenseite zwei Kammern gebildet werden, setzen diesen Wärmedehnungen keinen Widerstand entgegen, da infolge der in jeder Radialebene über Kreuz geschalteten Leitungen zur Verbindung der Kammern ein Volumenausgleich auftritt, ohne daß sich die Zentrierung der Maschine ändert. Tritt dagegen eine einseitig gerichtete Kraft wie z. B. einseitiger magnetischer Zug auf, so ist bei derartigen auf beiden Seiten der Maschinenlängsachse gleichgerichteten Bewegungen ein Volumenausgleich der Hydraulikelemente über die Leitungen nicht möglich. Dadurch ist die Abstützung der horizontalen Maschine gegenüber derartigen einseitigen Kräften sehr steif. Außerdem ist verhindert, daß sich die Maschinenlängsachse aus ihrer zentrischen Lage heraus bewegen kann. Ein zusätzliches Sicherheitselement bilden die in jeder Radialebene und auf jeder Maschinenseite parallel zu zumindest einem Hydraulikelement liegenden Anschläge. Diese werden wirksam, falls ein Hydraulikelement undicht wird und somit versagt. Da bei den Anschlägen die senkrecht gegenüberstehenden Anschlagflächen zueinander einen Abstand aufweisen, der angenähert der maximalen Wärmedehnung entspricht und kleiner als der Luftspalt der Maschine ist, werden Wärmedehnungen nicht behindert und eine einseitige Überbrückung des Maschinenluftspalts und damit ein Anlaufen des Rotors an die Ständerbohrung infolge magnetischen Zuges wird vermieden.

Als Hydraulikelement können ein- oder zweikammrige Zylinder-Kolbensysteme verwendet werden. Man kann auch ein einkammriges elastisches Gehäuse mit einer Silikon-Elastomer-Füllung vorsehen, das an den Begrenzungswänden des Fundamentes und des Maschinengehäuses bzw. der mit ihm verbundenen Auflageplatte anliegt. Als Hydraulikflüssigkeit sind auch andere Öle oder Harze geeignet.

Es empfiehlt sich, das radial außen liegende einkammrige elastische Hydraulikelement im Bereich der oberen Auflageplatte und das radial innen liegende elastische Hydraulikelement im Bereich der unteren Auflageplatte jeweils zwischen dem Maschinengehäuse und dem Fundament anzuordnen, um den zur Verfügung stehenden Raum gut auszunutzen.

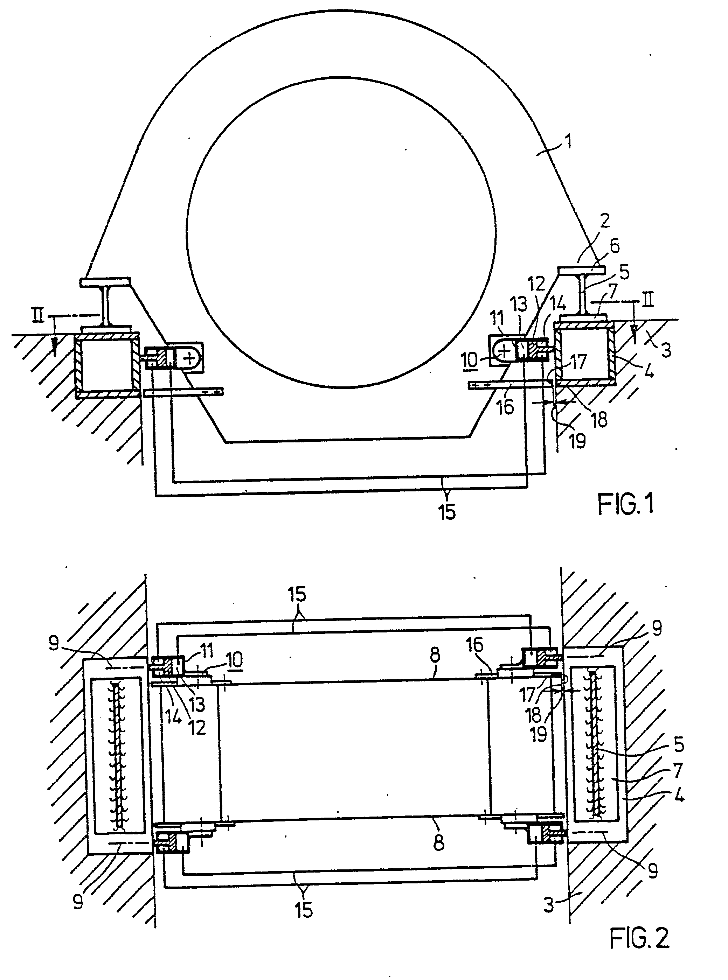

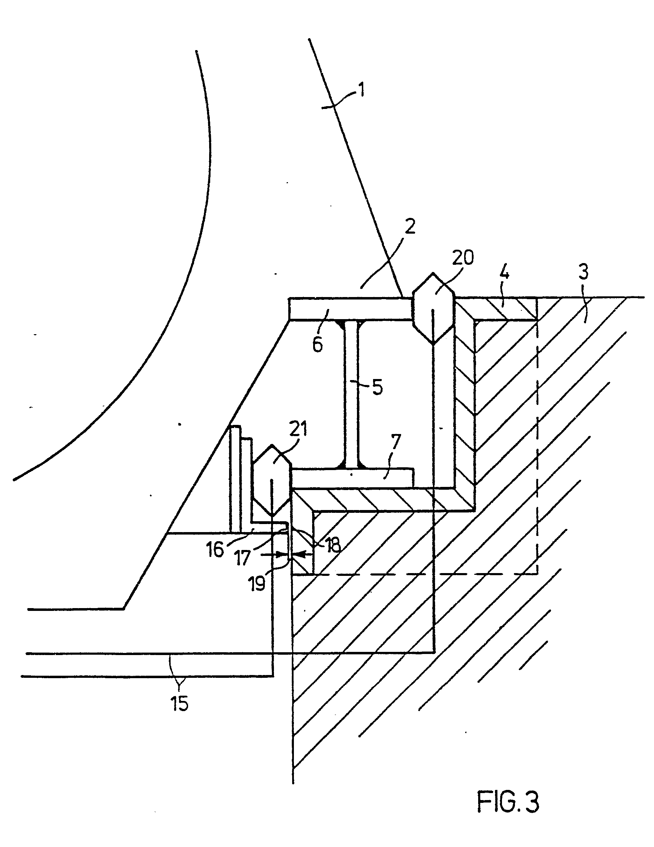

Im folgenden sei die Erfindung noch anhand der in den Figuren 1-3 der Zeichnung dargestellten Ausführungsbeispiele näher erläutert. Die Figur 1 zeigt ein erstes Ausführungsbeispiel in einer Stirnansicht der elektrischen Maschine, die Figur 2 einen Schnitt entlang der Linie II-II in Fig. 1. In Fig. 3 ist ein weiteres Ausführungsbeispiel in einer Teilsstirnansicht dargestellt. Die Darstellung ist jeweils schematisch, Einzelheiten des Maschinengehäuses sind nicht gezeigt. Für gleiche Teile sind jeweils die gleichen Bezugszeichen beibehalten.

Das Maschinengehäuse 1 einer elektrischen Maschine mit nicht dargestellter horizontaler Welle stützt sich über die Füße 2 auf dem mit dem Fundament 3 verbundenen Grundrahmen 4 ab. Als Befestigungselement dient eine parallel zur Maschinenlängsachse verlaufende, senkrecht stehende, rechteckige Platte 5, die mit zwei horizontalen Auflageplatten 6, 7 verschweißt ist, so daß das Befestigungselement ein Doppel-T-Profil aufweist. Die obere Auflageplatte 6 ist mit dem Fuß 2 des Maschinengehäuses 1 verbunden, die untere Auflageplatte 7 ist am Grundrahmen 4 des Fundaments 3 befestigt.

Außerdem sind in zwei jeweils kurz vor den Stirnflächen 8 der Maschine liegenden, in Fig. 2 durch seitliche Striche angedeuteten Radialebenen 9 auf jeder Maschinenseite symmetrisch zur Maschinenlängsachse Hydraulikelemente 10 angeordnet. Jedes Hydraulikelement 10 besitzt ein starres Zylindergehäuse 11, da am Maschinengehäuse 1 befestigt ist. Das Zylindergehäuse 11 wird durch einen mittleren Kolben 12, der seinerseits am Grundrahmen 4 des Fundaments 3 befestigt ist, in zwei Kammern 13, 14 unterteilt. Die Kammer 13 befindet sich auf der dem Maschinengehäuse zugewandten Seite, die Kammer 14 ist dem Fundament 3 zugewandt. Die Hydraulikelemente 10 liegen im Bereich unterhalb der unteren Auflageplatte 7, da dort für sie ein genügend großer Raum zur Verfügung steht. Von den in einer Radialebene 9 liegenden beiden Hydraulikelementen 10 ist jeweils die auf einer Maschinenseite radial innen liegende Kammer 13 über eine Leitung 15 mit der radial außen liegenden Kammer 14 auf der anderen Maschinenseite verbunden.

Weiterhin sind jeweils unterhalb der Hydraulikelemente 10 am Maschinengehäuse 1 Anschläge 16 befestigt, die parallel zum Hydraulikelement 10 verlaufen und deren senkrecht stehende stirnseitige Anschlagfläche 17 zu der gegenüberstehenden Anschlagfläche 18 am Grundrahmen 4 des Fundaments 3 einen durch Pfeile angedeuteten Abstand 19 aufweisen. Dieser Abstand 19 entspricht mindestens angenähert der maximalen Wärmedehnung und ist kleiner als der Luftspalt der elektrischen Maschine.

Treten nun während des Betriebes der elektrischen Maschine infolge von Temperaturänderungen Wärmedehnungen auf, so dehnt sich das Maschinengehäuse 1 auf beiden Seiten der Maschinenlängsachse in gleicher Richtung, z. B. bei Erwärmung nach außen. Dies wird durch eine Biegung der senkrechten rechteckigen Platten 5 um ihre Längsachse aufgenommen, ohne daß zwischen den unteren Auflageplatten 7 und dem Fundament 3 nennenswerte Wärmedehnungskräfte auftreten. Die Hydraulikelemente 10 setzen dieser Bewegung des Maschinengehäuses 1 gegenüber dem Grundrahmen 4 des Fundamentes 3 ebenfalls keinen Widerstand entgegen, da die jeweils radial außen liegende Kammer 14, die sich jeweils vergrößert, mit einer sich entsprechend verkleinernden, radial innen liegenden Kammer 13 verbunden ist und über die Leitungen 15 ein Flüssigkeitsaustausch gegeben ist. Auch die Anschläge 16 nehmen entsprechend der Bemessung des Abstandes 19 zur Anschlagsfläche des Fundamentes 3 ungehindert an dieser Bewegung teil.

Würde dagegen während des Betriebes der elektrischen Maschine eine einseitig gerichtete Kraft auftreten, wie sie z. B. durch einen einseitigen magnetischen Zug gegeben sein kann, so ist infolge der einseitigen gleichsinnigen Verlagerung des Maschinengehäuses auf beiden Maschinenseiten ein Flüssigkeitsaustausch über die Leitungen 15 zwischen den Kammern 13, 14 der Hydraulikelemente 10 nicht möglich. Die Hydraulikelemente 10 verhalten sich in diesem Fall steif. Dadurch wird verhindert, daß die Maschinenlängsachse aus ihrer zentrischen Lage auswandern kann. Für den ungünstigsten Fall, daß eines der Hydraulikelemente 10 infolge Undichtigkeit nicht mehr funktionsfähig ist, würde auch in diesem Fall eines einseitigen magnetischen Zuges ein Anschleifen des Rotors der Maschine an die Ständerbohrung durch die Anschläge 16 vermieden sein, weil dann zuvor der Abstand 19, der kleiner als der Luftspalt der Maschine ist, überbrückt wäre. Die Anschlagsflächen 17, 18 würden dann die Zentrierung der Maschine übernehmen.

Ein etwas abgewandeltes Ausführungsbeispiel der Erfindung ist in Fig. 3 dargestellt. Auch hier ist der Fuß 2 des Maschinengehäuses 1 einer elektrischen Maschine mit horizontaler Welle über die rechteckige, parallel zur Maschinenlängsachse verlaufende, senkrechte Platte 5, die mit den horizontalen Auflageplatten 6, 7 verschweißt ist, mit dem Grundrahmen 4 des Fundamentes 3 verbunden. Der Grundrahmen 4 ist bei diesem Ausführungsbeispiel bis in die Höhe der oberen Auflageplatte 6 gezogen, und zwischen der Auflageplatte 6 und der gegenüberstehenden Fläche des Grundrahmens 4 ist ein Hydraulikelement 20 angeordnet. Dieses Hydraulikelement 20 ist einkammrig ausgebildet. Es hat ein elastisches Gehäuse und ist mit einem Silikon-Elastomer gefüllt. Auch zwischen der unteren Auflageplatte 7 und der dortigen, mit ihr verbundenen Teil des Grundrahmens 4 und dem Maschinengehäuse 1 ist ein weiteres einkammriges Hydraulikelement 21 angeordnet. Diese Hydraulikelemente 20, 21 liegen jeweils symmetrisch zur Maschinenlängsachse, so daß in einer Radialebene insgesamt vier Hydraulikelemente 20, 21 vorhanden sind. Das auf der einen Maschinenseite jeweils radial innen liegende, untere Hydraulikelement 21 ist über die Leitungen 15 jeweils mit dem oberen, radial außen liegenden Hydraulikelement 20 auf der anderen Maschinenseite verbunden. Unterhalb des unteren Hydraulikelementes 21 ist weiterhin am Maschinengehäuse 1 jeweils ein Anschlag 16 befestigt, dessen senkrecht stehende Anschlagfläche 17 einer entsprechenden senkrechten Anschlagfläche 18 am Grundrahmen 4 bzw. dem Fundament 3 gegenübersteht. Der Abstand 19 zwischen beiden Anschlagsflächen 17, 18 entspricht angenähert der maximalen Wärmedehnung und ist kleiner als der Luftspalt der Maschine.

Auch hier wird eine auf beiden Maschinenseiten nach außen oder innen gerichtete Bewegung des Maschinengehäuses infolge von Wärmedehnungen durch eine Biegung der senkrechten Platte 5 aufgenommen und durch die Hydraulikelemente 20, 21 nicht behindert, weil ein Flüssigkeitsaustausch zwischen den über Kreuz verbundenen Kammern auf verschiedenen Maschinenseiten möglich ist. Gegen einseitig gerichtete Kräfte verhalten sich die Hydraulikelemente 20, 21 steif. Auch im Falle des Ausfalls eines Hydraulikelementes 20, 21 wird ein Anstreifen des Läufers der elektrischen Maschine an die Ständerbohrung durch die Anschläge 16 vermieden, deren Abstand 19 bereits vorher überbrückt wird.

## Patentansprüche

1. Elektrische Maschine mit horizontaler Welle, bei der zur Abstützung auf dem Fundament (3) zwischen dem Maschinengehäuse (1) und dem Fundament (3) auf jeder Maschinenseite eine senkrecht stehende, parallel zur Maschinenlängsachse verlaufende rechteckige Platte (5) mit zwei horizontalen Auflageplatten (6, 7) vorgesehen ist, dadurch gekennzeichnet, daß zusätzlich in mindestens zwei, mit Abstand zueinander liegenden Radialebenen (9) jeweils auf jeder Maschinenseite symmetrisch zur Maschinenlängsachse Hydraulikelemente (10, 20, 21) angeordnet sind, die jeweils auf jeder Maschinenseite zwei Kammern (13, 14) bilden, von denen jeweils die auf einer Maschinenseite innen liegende (13) mit der radial außen liegenden (14) auf der anderen Maschinenseite über Leitungen (15) verbunden ist, wobei die Begrenzungen der Kammern (13, 14) entweder mit dem Maschinengehäuse (1) oder mit dem Fundament (3) verbunden sind, und daß auf jeder Maschinenseite am Maschinengehäuse (1) und am Fundament (3) parallel zu zumindest einem Hydraulikelement (10, 21) liegende Anschläge (16) vorgesehen sind, deren senkrecht gegenüberstehende Anschlagflächen (17, 18) zueinander einen Abstand (19) aufweisen, der angenähert der maximalen Wärmedehnung entspricht und kleiner als der Luftspalt der Maschine ist.

2. Elektrische Maschine nach Anspruch 1, dadurch gekennzeichnet, daß auf jeder Maschinenseite in jeder Radialebene (9) zwei Hydraulikelemente (20, 21) liegen, die jeweils eine Kammer bilden und ein elastisches Gehäuse aufweisen, das mit einem Silikon-Elastomer gefüllt ist.

3. Elektrische Maschine nach Anspruch 2, dadurch gekennzeichnet, daß das radial außen liegende Hydraulikelement (20) im Bereich der Oberen Auflageplatte (6) und das radial innen liegende Hydraulikelement (21) im Bereich der Unteren Auflageplatte (7) jeweils zwischen dem Maschinengehäuse (1) und dem Fundament (3) angeordnet ist.

4. Elektrische Maschine nach Anspruch 1, dadurch gekennzeichnet, daß in jeder Radialebene (9) auf jeder Maschinenseite unterhalb der unteren Auflageplatte (7) ein Hydraulikelement (10) mit einem starren zylindrischen Gehäuse (11) angeordnet ist, dessen Innenraum durch einen mittleren Kolben (12) in zwei Kammern (13, 14) unterteilt ist.

## Claims

1. An electrical machine with a horizontal shaft, in which a rectangular plate (5) with two horizontal supporting plates (6, 7), is provided between the machine housing (1) and the base (3) on each side of the machine to support it on the base (3), each plate (5) standing vertically and extending parallel to the longitudinal axis of the machine, characterised in that in addition, in at least two radial planes (9) situated at a distance from each other, respective hydraulic elements (10, 20, 21) are positioned on each side of the machine, symmetrical to the longitudinal axis of the machine, forming in each case two chambers (13, 14) on each side of the machine, of which in each case the innermost chamber (13) on one side of the machine is connected with the radially outer chamber (14) on the other side of the machine via lines (15), whereby the walls of the chambers (13, 14) are connected either with the machine housing (1) or with the base (3), and that on each side of the machine stops (16) are provided on the machine housing (1) and on the base (3), lying parallel to at least one hydraulic element (10, 21), with mutually opposed stop faces (17, 18) standing normal thereto, at a distance (19) from each other which corresponds approximately with the maximum thermal expansion and is smaller than the machine's air gap.

2. An electrical machine as claimed in Claim 1, characterised in that on each side of the machine two hydraulic elements (20, 21) are situated in respective radial planes (9), which in each case form a chamber having an elastic housing filled with a silicon elastomer.

3. An electrical machine as claimed in Claim 2, characterised in that that hydraulic element (20) situated radially on the outside is positioned in the area of the upper supporting plate (6), and that hydraulic element (21) situated radially on the inside is positioned in the area of the lower supporting plate (7), in each case between the machine housing (1) and the base (3).

4. An electrical machine as claimed in Claim 1, characterised in that in each radial plane (9) on each side of the machine, one hydraulic element (10) with a rigid cylindrical housing (11) is positioned below the lower supporting plate (7) and its interior is divided by a central piston (12) into two chambers (13, 14).

### Revendications

1. Machine électrique à arbre horizontal, dans laquelle il est prévu, pour l'appui sur le socle (3), entre le carter de la machine (1) et le socle (3), sur chaque côté de la machine, une plaque rectangulaire perpendiculaire (5) qui s'étend parallèlement à l'axe longitudinal de la machine et qui est pourvue de deux plaques horizontales d'appui (6, 7), caractérisée par le fait que sont, de plus, prévus dans au moins deux plans radiaux (9) situés à distance l'un de l'autre, respectivement sur chaque côté de la machine et symétriquement par rapport à l'axe longitudinal de la machine, des éléments hydrauliques (10, 20, 21) constituant sur chaque côté de la machine deux chambres (13, 14), dont celle (13) qui est située du côté intérieur par rapport à un côté de la machine, est reliée par des conduites à la chambre radialement extérieure (14) par rapport à l'autre côté de la machine, les délimitations des chambres (13, 14) étant reliées soit au carter de la machine (1), soit au socle (3) et qu'il est prévu sur chaque côté de la machine, sur le carter de la machine (1) ou sur le socle (3), des butées (16) qui sont parallèles à au moins un élément hydraulique (10, 21) et dont les surfaces de butées antagonistes (17, 18) qui lui sont perpendiculaires, présentent entre elles une distance (19) qui correspond approximativement à la dilatation thermique maximale et qui est inférieure à l'entrefer de la machine.

2. Machine électrique selon la revendication 1, caractérisée par le fait que sur chaque côté de la machine, et dans chaque plan radial (9), sont situés deux éléments hydrauliques (20, 21) qui constituent une chambre et qui comportent un boîtier élastique qui est rempli avec un élastomère au silicone.

3. Machine électrique selon la revendication 2, caractérisée par le fait que l'élément hydraulique situé radialement à l'extérieur (20) est disposé dans la zone de la plaque d'appui supérieure (6) alors que l'élément hydraulique (21) radialement intérieur est disposé dans la zone de la plaque d'appui inférieure (7), respectivement entre le boîtier de machine (1) et le socle (3).

4. Machine électrique selon la revendication 1, caractérisée par le fait que dans chaque plan radial (9) et sur chaque côté de la machine est disposé, en dessous de la plaque d'appui inférieure (7), un élément hydraulique (10) comportant un boîtier cylindrique rigide (11) dont la chambre intérieure est subdivisée en deux chambres (13, 14), à l'aide d'un piston médian (12).

0 157 990

FIG.1

FIG.2

FIG.3